# EUROPÄISCHE PATENTSCHRIFT

(11) **EP 0 508 201 B1**
(45) Veröffentlichungstag und Bekanntmachung des Hinweises auf die Patenterteilung: **09.08.1995**
(21) Anmeldenummer: 92104966.4
(22) Anmeldetag: 23.03.1992
(51) Int. Cl.: B65D 50/14, B65D 85/57

(54) **Diebstahlsicherungs-Vorrichtung**
Theft protection device
Dispositif de sécurité anti-vol

(30) Priorität: 08.04.1991 CH 1033/91
(43) Veröffentlichungstag der Anmeldung: 14.10.1992
(73) Patentinhaber: PATACO AG, 8353 Elgg (CH)
(72) Erfinder: Brühwiler, Othmar, CH-9202 Gossau (CH)
(74) Vertreter: Troesch Scheidegger Werner AG

(56) Entgegenhaltungen:
- EP-A- 0 400 423
- GB-A- 1 485 885
- US-A- 3 828 922
- US-A- 4 285 429
- US-A- 4 966 020

## Beschreibung

Die vorliegende Erfindung betrifft eine Diebstahlsicherungs-Vorrichtung für einen zum Verkauf bestimmten schachtelförmigen Gegenstand, insbesondere eine Kassette mit einem Datenträger, wie z.B. einen Kompakt-Disk, bestehend aus einer zur Aufnahme des Gegenstandes bestimmten und eine Einschuböffnung an einer Schmalseite sowie Signalgeber zum Auslösen eines Alarms aufweisenden Hülle, sowie an dieser angeordneten bzw. mit dieser zusammenwirkenden und mit dem in der Hülle enthaltenen Gegenstand in Eingriff bringbaren Verriegelungsmitteln, die zwecks Trennung von Hülle und Gegenstand mit Hilfe eines Spezialwerkzeuges entriegelbar sind. Eine gattungsgemäße Vorrichtung ist durch die EP-A-0 400 423 bekanntgeworden.

Bei bekannten Vorrichtungen dieser Art besteht die Hülle in der Regel aus hartem Kunststoff, welche einen gegen Diebstahl zu sichernden schachtelförmigen Gegenstand aufzunehmen hat, wie beispielsweise eine CD-Kassette, wobei die Hülle mit einer sogenannten Schwingkreisetikette versehen ist, damit beim Passieren einer am Ausgang von Verkaufsgeschäften angeordneten Induktionsschleife ein Alarm ausgelöst wird, wenn die Hülle einschliesslich des Gegenstandes ohne Bezahlung mitgenommen wird. In der Regel wird an der Kasse eines Verkaufsgeschäftes die wiederverwendbare Hülle mittels eines Spezialwerkzeuges von der CD-Kassette getrennt. Es sind die verschiedensten Verriegelungssysteme bekannt, wobei dazu mit Bolzen, Stiften oder Haken gearbeitet wird, welche die Hülle mit dem Gegenstand solange verbinden, bis eine Entriegelung mit Hilfe eines speziellen Werkzeuges erfolgt.

Bei den bisher verwendeten Hüllen aus hartem Kunststoff konnten, wie bereits gesagt, die verschiedensten Verriegelungssysteme eingesetzt werden. Ein Nachteil bestand darin, dass eine sichere Verriegelung nicht immer gewährleistet war. Hinzu kommt nun, dass vermehrt aus Umweltschutzgründen die Beschaffenheit der Hüllen geändert werden muss, d.h. dass anstelle von hartem Kunststoff immer mehr weiche, umweltverträglichere Kunststoffe zu verwenden sind. Mit derart sogenannten weichen Hüllen können die meisten der bisherigen Systeme nicht mehr zum Einsatz kommen, da durch Anwendung üblicher Kräfte eine Trennung von Hülle und Gegenstand relativ leicht erfolgen kann. Damit ist selbstverständlich der Sinn der angestrebten Diebstahlsicherungs-Vorrichtung nicht mehr erfüllt.

Aufgabe der vorliegenden Erfindung war es deshalb, ein neuartiges Verriegelungssystem zu schaffen, welches unabhängig von der Beschaffenheit der Hüllen zur Anwendung gelangen kann und dabei einen in die Hülle eingeführten Gegenstand sicher gegen Diebstahl zu schützen vermag. Die Aufgabe war insbesondere soweit gefasst, dass neben Hüllen aus Kunststoff auch solche aus Hartpapier (Karton) grundsätzlich verwendet werden können.

Die gestellte Aufgabe wird bei einer Diebstahlsicherungs-Vorrichtung der eingangs definierten Art mittels der Merkmale gemäss Anspruch 1 gelöst.

Kernstück ist somit das bügelförmige Hilfselement, welches vorzugsweise aus magnetischem Material besteht, insbesondere aus Stahl, und die Entriegelung mittels eines auf das Bügelende einwirkenden Magneten erfolgen kann.

Das bügelförmige Hilfselement ist vorzugsweise in einem Längsschlitz in der zugehörigen Schmalseite der Hüllenwand längsverschieblich geführt, bzw. befestigt. Die Länge des bügelförmigen Hilfselementes ist vorzugsweise grösser als die Länge der zugehörigen Schmalseite der Hülle, dies,damit der Gegenstand jeder Zeit aus der Hülle gezogen werden kann. Dies könnte grundsätzlich auch dadurch erreicht werden, dass die Hülle auf der Seite der Einschuböffnung mit Aussparungen versehen ist, welche das Erfassen des Gegenstandes erlauben.

Vorzugsweise weist das aussenliegende Bügelende zwischen dem eigentlichen Bügelsteg und dem nach innen abstehenden Schenkel eine Eckversteifung in Form einer sich über die Ecke erstreckenden angeformten Platte auf.

Bei einer besonders bevorzugten Ausführungsform weist das innenliegende Bügelende einen Längsschlitz auf, welcher das Bügelende in zwei getrennte ferdernde Zungen trennt, wobei am Ende der einen Zunge der nach innen abstehende Halteschenkel vorgesehen ist, während am Ende der anderen, etwas längeren Zunge, die ebenfalls nach innen abgewinkelte Verriegelungsnase angeformt ist.

Bei dieser Ausgestaltung kann am innenliegenden Ende der das bügelförmige Hilfselement führenden Hüllenschmalseite eine Auflaufschräge für die den Halteschenkel aufweisende Zunge vorgesehen sein, derart, dass in der eingeschobenen Stellung des Bügels das innenliegende, die beiden Zungen aufweisende Bügelende zwangsweise leicht nach innen gedrückt wird und so die Einnahme der Verriegelungsstellung der Verriegelungsnase gewährleistet, ohne aber die Entriegelung zu verhindern.

Der Verriegelungsschlitz befindet sich vorzugsweise an der der Einschuböffnung gegenüberliegenden Hüllenschmalseite im Bereich der Ecke zwischen den beiden rechtwinklig aneinanderstossenden Schmalseiten.

Die Erfindung wird nachstehend anhand eines in der Zeichnung dargestellten Ausführungsbeispiels noch etwas näher erläutert. Es zeigen:
Fig. 1 eine schematische Gesamtansicht in Draufsicht einer erfindungsgemässen Diebstahlsicherungs-Vorrichtung;
Fig. 2a eine Teilansicht einer erfindungsgemässen Vorrichtung mit verriegelter Hülle;
Fig. 2b eine Ansicht (Ausschnitt) von oben auf die eigentliche Verriegelungsstelle;
Fig. 3 eine der Fig. 2a ähnliche Ansicht, bei welcher die Verriegelungsnase mittels Spezialwerkzeug aus der Verriegelungsstellung gezogen ist;
Fig. 4 eine ausschnittsweise Ansicht der Vorrichtung nach Fig. 2 und 3 mit vollständig ausgezogenem bügelförmigen Hilfselement;
Fig. 5 eine ähnliche Darstellung wie Fig. 4, mit federnd ausgebogenem Hilfselement, wobei in dieser Stellung der Gegenstand frei aus der Hülle entnehmbar ist, und
Fig. 6 eine Draufsicht von der Seite auf die erfindungsgemässe Vorrichtung in der Stellung der Fig. 2a und Fig. 3.

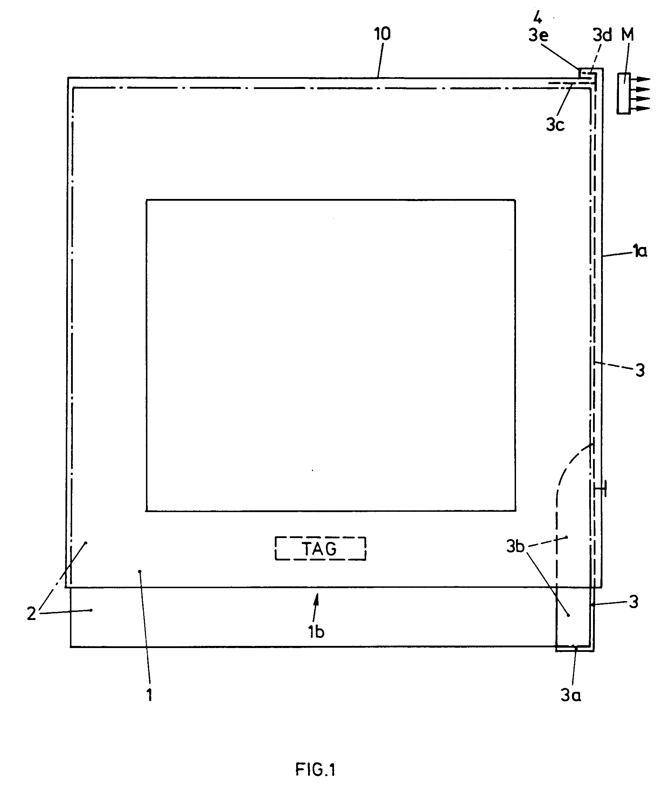

Fig. 1 zeigt eine Hülle aus Kunststoff oder Hartpapier mit einer Einschuböffnung für einen schachtelförmigen Gegenstand 2 auf der Schmalseite 1b. Die Verriegelungsmittel bestehen hier aus einem bügelförmigen Hilfselement 3, welches entlang der Schmalseite 1a der Hülle längsverschieblich geführt ist (die Verschiebung kann mindestens über die halbe Länge der Schmalseite erfolgen). Das Hilfselement 3 weist zwei rechtwinklig nach innen abstehende steife Schenkel 3a, 3c auf, wobei der schachtelförmige Gegenstand 2 zwischen diesen Schenkeln 3a, 3c beim Verschieben sicher gefangen ist (klammerartig umgriffen). In der eingeschobenen Stellung des Hilfselementes 3 wird eine Verriegelungsnase 3d, welche etwas über den Schenkeln 3c vorsteht, in einen Verriegelungsschlitz 3e an der Schmalseite 1c der Hülle 1 einrasten, und aus dieser Stellung lediglich mittels eines starken Magnetes M wieder entriegelbar sein. In der entriegelten Stellung kann der Gegenstand 2 zusammen mit dem Hilfselement aus der Hülle gezogen werden, dies bis zu einem Endanschlag des Hilfselementes 3. In dieser Stellung kann das untere Ende des Hilfselementes 3 auch aussen gebogen werden und der Gegenstand 2 völlig aus der Hülle entnommen werden. Dieser Mechanismus wird weiter unten noch etwas näher erläutert.

Grundsätzlich könnte das Hilfselement 3 auch frei entlang der Schmalseite 1a laufen, d.h. nicht festgehalten sein. Aus praktischen Gründen ist es aber besser, das Hilfselement 3 an der Schmalseite 1a der Hülle 1 längsverschieblich festzuhalten.

Es ist auch denkbar, anstelle eines magnetischen Entriegelungsmechanismus einen mechanischen Mechanismus vorzusehen, wobei ein Spezialwerkzeug vorgesehen sein müsste, welches die Verriegelungsnase 3d aus der eingenommenen Verriegelungsstellung bringt.

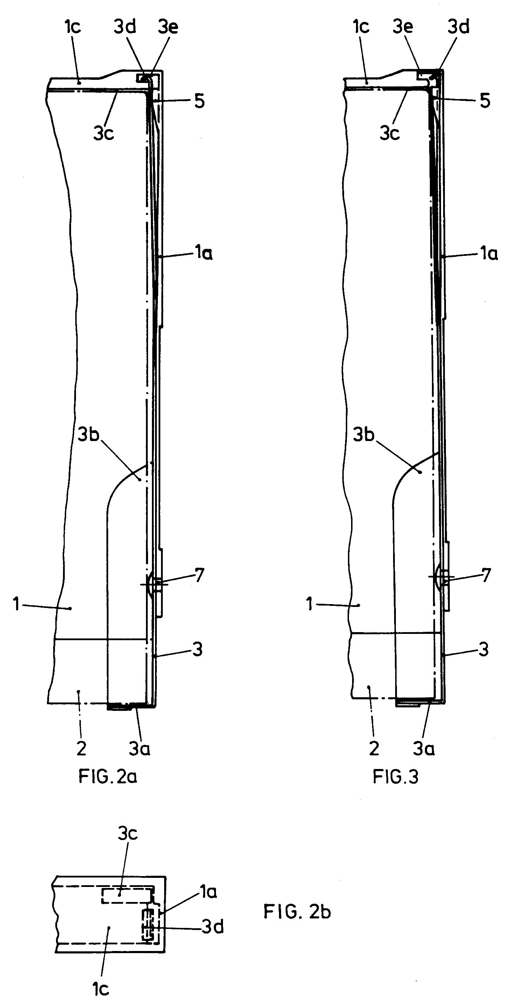

Weitere Details der erfindungsgemässen Diebstahlsicherungs-Vorrichtung sind aus den Fig. 2 bis 6 ersichtlich.

Diese Figuren zeigen insbesondere, wie das bügelförmige Hilfselement 3 in einem Längsschlitz 6 in der Schmalseite 1a der Hülle mittels einer Niete 7 verschiebbar gehalten ist. Diese Figuren zeigen auch , wie die Versteifung der äusseren Eckpartie des Hilfselementes 3 erfolgt:
Zwischen der vom Steg 3 und dem Schenkel 3a gebildeten Ecke ist entlang deren Kanten eine Versteifungsplatte 3b angeordnet, deren Grösse an sich von der Länge des Schenkels 3a abhängt, grundsätzlich jedoch beliebig gewählt werden kann. Die Platte 3b bildet eine Art Schachtelboden zwischen dem Steg 3 und dem Schenkel 3a.

Aus diesen Zeichnungen geht auch hervor, dass das innere Ende des bügelförmigen Hilfselementes durch einen Längsschlitz 8 in zwei Zungen 9,10 geteilt ist, wobei am Ende der Zunge 9 der Halteschenkel 3c und am Ende der Zunge 10, welche etwas über die Zunge 9 vorsteht, die ebenfalls nach innen abstehende Verriegungsnase 3d vorgesehen ist. Im Bereich der Zunge 9 ist auf der Innenseite der Schmalseite 1a eine Auflaufschräge 5 vorgesehen, welche beim Einschieben des bügelförmigen Hilfselementes 3 in der Endphase die Zunge 9 leicht anhebt und nach innen an den Gegenstand drückt. Da die Zungen 9 und 10 schliesslich aus einem Stück gebildet sind, wird damit auch die Zunge 10, welche die Verriegelungsnase 3d trägt, nach innen gezogen, so dass sie sich in der Endstellung sicher im Verriegelungsschlitz 3e befindet und sich aus dieser Stellung nur mit dem Spezialwerkzeug (Magnet M) aus der Verriegungsstellung zurückziehen lässt.

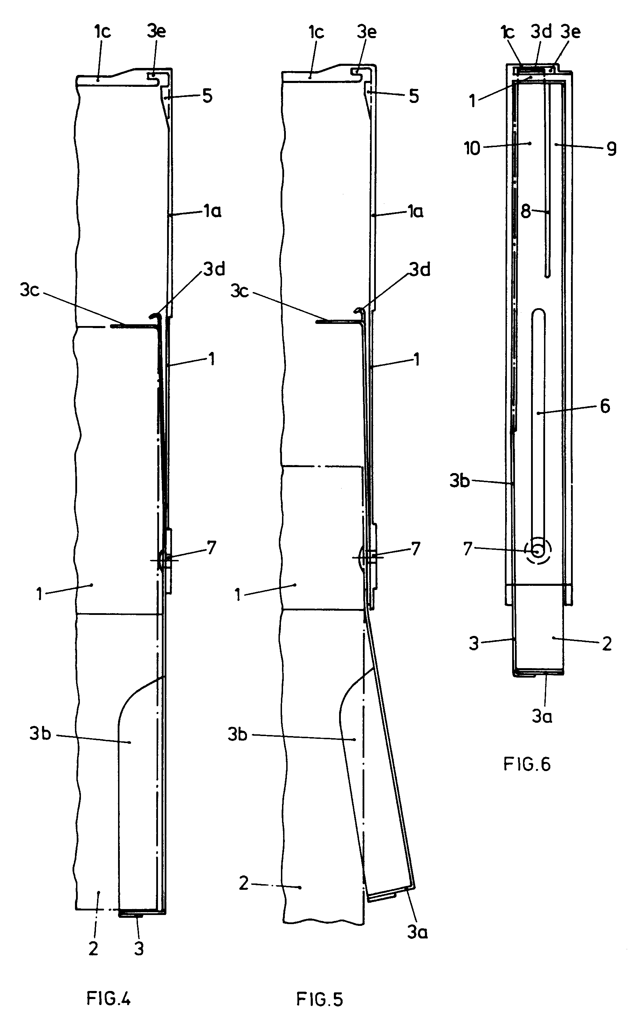

Fig. 4 der Zeichnung zeigt die Vorrichtung mit ausgefahrenem Hilfselement, und Fig. 5 veranschaulicht, wie in dieser Stellung das unter Ende des bügelförmigen Hilfselementes 3 federnd ausgebogen werden kann, so dass der eingeschlossene Gegenstand problemlos aus der Hülle gezogen werden kann. Diese Stellung ist auch jene, welche das Einsetzen eines zu sichernden Gegenstandes in das bügelförmige Hilfselement (Klammer) und schliesslich in die schützende Hülle ermöglicht.

Der Verriegelungsschlitz 3e befindet sich in der oberen Schmalseite der Hülle und ist bei der Herstellung der Hülle ohne weitere Probleme anzubringen.

Aus der gezeigten Konstruktion ergibt sich, dass mit einfachsten Mitteln eine ausserordentlich sichere Vorrichtung geschaffen werden kann. Es ist dabei unwesentlich, ob sich die Hülle aus hartem Kunststoff, weichem Kunststoff oder gar Hartpapier (Karton) zusammensetzt. Die Verwendung des bügelförmigen Hilfselementes erlaubt auch eine sichere Verriegelung bei weniger harten Materialien.

## Patentansprüche

1. Diebstahlsicherungs-Vorrichtung für einen zum Verkauf bestimmten schachtelförmigen Gegenstand (2), insbesondere Kassette mit einem Datenträger, bestehend aus einer zur Aufnahme des Gegenstandes (2) bestimmten und eine Einschuböffnung (1b) an einer Schmalseite sowie Signalgeber zum Auslösen eines Alarms aufweisenden Hülle (1) sowie an dieser angeordneten bzw. mit dieser zusammenwirkenden und mit dem in der Hülle (1) enthaltenen Gegenstand (2) in Eingriff bringbaren Verriegelungsmitteln (3,4), die zwecks Trennung von Hülle (1) und Gegenstand (2) mit Hilfe eines Spezialwerkzeuges (M) entriegelbar sind, dadurch gekennzeichnet, dass an einer von zwei einander gegenüberliegenden Schmalseiten (1a) der Hülle (1) innenseitig ein längsverschiebbar geführtes bügelförmiges Hilfselement (3) vorgesehen ist, an dessen Enden jeweils ein rechtwinklig abstehender steifer Schenkel (3a;3c) vorgesehen ist, wobei der schachtelförmige Gegenstand (2) zwischen diesen Schenkeln (3a;3c) beim Verschieben gefangen ist und das aussenliegende Bügelendstück (3,3a) federnd ausbiegbar ist, um den Gegenstand (2) bei ausgefahrenem Bügel (3) aus dem Bügel (3) und damit aus der Hülle (1) zu entnehmen bzw. einzusetzen, während das innenliegende Bügelende (3,3c) neben dem abstehenden Schenkel (3c) eine in Bügellängsrichtung gesehen ausserhalb des Schenkels (3c) liegende, ebenfalls nach innen abstehende Verriegelungsnase (3d) aufweist, welche dazu vorgesehen ist, bei im wesentlich vollständig in die Hülle (1) eingeschobenem Bügel (63) in einen Verriegelungsschlitz (3e) an der der Einschuböffnung (1b) gegenüberliegenden Schmalseite (1c) der Hülle (1) einzurasten, wobei eine gewünschte Entriegelung mittels eines Spezialwerkzeuges (M) erfolgt.

2. Vorrichtung nach Anspruch 1, dadurch gekennzeichnet, dass das bügelförmige Hilfselement (3) aus magnetischem Material, insbesondere aus Stahl besteht und die Entriegelung mittels eines auf das Bügelende wirkenden Magneten (M) erfolgt.

3. Vorichtung nach Anspruch 1 oder 2, dadurch gekennzeichnet, dass das bügelförmige Hilfselement (3) in einem Längsschlitz (6) in der zugehörigen Schmalseite (1a) der Hülle (1) längsverschieblich befestigt ist.

4. Vorrichtung nach einem der Ansprüche 1-3, dadurch gekennzeichnet, dass die Länge des bügelförmigen Hilfselementes (3) grösser ist als die Länge der zugehörigen Schmalseite (1a) der Hülle (1).

5. Vorrichtung nach einem der Ansprüche 1-4, dadurch gekennzeichnet, dass das aussenliegende Bügelende (3,3a) zwischen dem Bügelsteg (3) und dem nach innen abstehenden Schenkel (3a) eine Eckversteifung in Form einer entlang einer Steg-Schenkelkante angeformten Platte (3b) aufweist.

6. Vorrichtung nach einem der Ansprüche 1-5, dadurch gekennzeichnet, dass das innenliegende Bügelende (3,3c) einen Längsschlitz (8) aufweist und so das Bügelende zwei getrennte federnde Zungen (9;10) aufweist, wobei am Ende der einen Zunge (9) der nach innen abstehende Halteschenkel (3c) vorgesehen ist, während am Ende der anderen, etwas längeren Zunge (10) die ebenfalls nach innen abgewinkelte Verriegelungsnase (3d) angeformt ist.

7. Vorrichtung nach Anspruch 6, dadurch gekennzeichnet, dass am innenliegenden Ende der das bügelförmige Hilfselement (3) führenden Hüllenschmalseite (1a) eine Auflaufschräge (5) für die den Halteschenkel (3c) aufweisende Zunge (9) vorgesehen ist, derart, dass in der eingeschobenen Stellung des Bügels (3) das innenliegende, die beiden Zungen (9,10) aufweisende Bügelende (3,3c) zwangsweise leicht nach innen gedrückt wird und so die Einnahme der Verriegelungsstellung der Verriegelungsnase (3d) gewährleistet ist, ohne aber die Entriegelung zu verhindern.

8. Vorrichtung nach einem der Ansprüche 1-7, dadurch gekennzeichnet, dass sich der Verriegelungsschlitz (3e) an der der Einschuböffnung (1b) gegenüberliegenden Hüllenschmalseite (1c) im Bereich der Ecke zwischen zwei rechtwinklig aneinanderstossenden Schmalseiten (1a, 1c) befindet.

## Claims

1. An anti-theft apparatus for a box shaped article (2) intended to be sold, specifically a cassette with a data carrier, having a casing (1) for receipt of the article (2) including at one narrow side a slide-in opening (1b) and a signal transmitter adapted to trigger an alarm and comprising locking means (3, 4) arranged on respectively cooperating with same, which are adapted to engage the article (2) located in the casing (1), which locking means are adpated to be unlocked by means of a special tool (M) in order to separate the article (2) from the casing (1), characterized in that a bracket shaped auxiliary member (3) is provided, guided at the inner side of one of two opposite narrow sides (1a) of the casing (1) for a longitudinal displacement, which auxiliary member (3) includes at both its ends a prependicularly projecting stiff leg (3a; 3c), whereby the box shaped article (2) is caught between said legs (3a; 3c) during a displacing, which bracket shaped member has an end piece (3, 3a) positioned at the outside which is elastically bendable allowing a removing of the article (2) from the bracket (3) and therefore from the casing (1) and a setting-in of same thereinto when the bracket (3) is in its drawn-out position, whereby the end (3, 3c) of the bracket positioned at the inside includes a locking lug (3d) located adjacent the projecting leg (3c) and positioned, seen in the longitudinal direction of the bracket, outside of the leg (3c) and projecting also towards the inside, which lug is adapted to snap into a locking slot (3e) at the narrow side (1c) of the casing (1) located opposite of the slide-in opening (1b) when the bracket (3) is at least substantially completely slid into the casing (1), whereby the desired unlocking proceeds by means of a special tool (M).

2. The apparatus according to claim 1, characterized in that the bracket shaped auxiliary member (3) consists of a magnet material, specifically steel, and the unlocking is made by a magnet (M) acting onto the end of the bracket.

3. The apparatus according to claim 1 or 2, characterized in that the bracket shaped auxiliary member (3) is mounted in a longitudinally displaceable manner at a longitudinal slot (6) in the corresponding narrow side (1a) of the casing (1).

4. The apparatus according to any of claims 1-3, characterized in that the length of the bracket shaped auxiliary member (3) exceeds the length of the corresponding narrow side (1a) of the casing (1).

5. The apparatus according to any of claims 1-4, characterized in that the end of the bracket (3, 3a) located at the outside includes a corner reinforcement in form of a plate (3b) formed along a web-leg edge positioned between the web proper of the bracket (3) and the leg (3a) projecting towards the inside.

6. The apparatus according to any of claims 1-5, characterized in that the end of the bracket (3, 3c) located at the inside includes a longitudinal slot (8) and accordingly the end of the bracket has two separate elastic tongues (9; 10), whereby the holding leg (3c) projecting towards the inside is positioned at the end of one tongue (9), and in which the arresting lug (3d) which is also angled towards the inside is formed at the end of the other somewhat longer trongue (10).

7. The apparatus according to claim 6, characterized in that an incline (5) for the tongue (9) which includes the holding leg (3c) is positioned at the end of the narrow side (1a) of the casing located at the inside and guiding the bracket shaped auxiliary member (3), such that when the bracket (3) is in pushed in position the end of the bracket end (3, 3c) located at the inside and including the two tongues (9, 10) is forced slightly inwards such that the moving of the locking lug (3d) into its locking position is guaranteed, but without a preventing of the unlocking.

8. The apparatus according to any of claims 1-7, characterized in that the locking slot (3e) is located at the narrow side (1c) of the casing opposite of the slide-in opening (1b) at the area of the corner of two perpendicularly abutting narrow sides (1a, 1c).

## Revendications

1. Dispositif de sécurité anti-vol pour un objet en forme de boîte (2) destiné à être vendu, notamment pour une cassette porteuse de données, comprenant une boîte (1) destinée à recevoir l'objet (2) et présentant à ces fins sur une des faces étroites une ouverture d'introduction (1b), un transmetteur de signaux pour déclencher une alarme ainsi que des moyens de verrouillage (3, 4) montés sur respectivement coopérant avec la boîte pouvant être mis en prise avec l'objet (2) introduit dans la boîte (1), ces moyens pouvant être déverrouillés à l'aide d'un outil spécial (M) pour séparer l'objet de la boîte, caractérisé en ce qu'il est prévu à l'intérieur de l'une de deux faces étroites opposées (1a) de la boîte (1) un élément auxiliaire (3) en forme d'étrier guidé de manière à pouvoir être déplacé longitudinalement, comprenant à chaque extrémité un tronçon à angle droit raide (3a; 3c), l'objet (2) en forme de boîte étant emprisonné lors d'un déplacement entre les tronçons (3a; 3c) et la partie terminale extérieur (3, 3a) de l'étrier étant pliable élastiquement vers l'extérieur pour permettre d'enlever respectivement d'introduire l'objet (2) avec l'étrier (3) en position sortie de l'étrier (3) et ainsi de la boîte (1) et la partie terminale intérieur (3, 3c) de l'étrier présente à côté du tronçon (3c) à angle droit un nez de verrouillage (3d) situé, vu en direction longitudinale de l'étrier, à l'extérieur du tronçon (3c) et recourbé également vers l'intérieur, prévu pour engager une rainure de verrouillage (3e) dans la face étroite (1c) de la boîte opposée à l'ouverture d'introduction (1b) lorsque l'étrier (3) est repoussé pratiquement complètement dans la boîte (1), un déverrouillage désiré se faisant alors à l'aide d'un outil spécial (M).

2. Dispositif selon la revendication 1, caractérisé en ce que l'élément auxiliaire (3) en forme d'étrier est en matière magnétique, particulièrement en acier et le déverrouillage se fait au moyen d'un aimant (M) agissant sur la partie terminale de l'étrier.

3. Dispositif selon la revendication 1 ou 2, caractérisé en ce que l'élément auxiliaire (3) en forme d'étrier est monté de manière à pouvoir être déplacé longitudinalement dans une fente longitudinale (6) de la face étroite associée (1a) de la boîte (1).

4. Dispositif selon l'une des revendications 1-3, caractérisé en ce que la longueur de l'élément auxiliaire (3) en forme d'étrier est plus grande que la longueur de la face étroite (1a) associée de la boîte (1).

5. Dispositif selon l'une des revendications 1-4, caractérisé en ce que la partie terminale extérieur (3, 3a) de l'étrier présente entre la partie (3) et le tronçon recourbé vers l'intérieur (3a) un renforcement du coin en forme d'une plaque (3b) formée le long d'une arrête du tronçon et de ladite partie.

6. Dispositif selon l'une des revendications 1-5, caractérisé en ce que la partie terminale intérieur (3, 3c) de l'étrier présente une fente longitudinale (8) et ainsi la partie terminale de l'étrier deux languettes élastiques (9; 10) séparées, ledit tronçon de retenu (3c) recourbé vers l'intérieur étant prévu à l'extrémité de l'une des languettes (9) tandis que l'extrémité de l'autre languette (10) ayant une longueur un peu plus grande porte le nez de verrouillage (3d) également recourbé vers l'intérieur.

7. Dispositif selon la revendication 6, caractérisé en ce qu'une partie inclinée (5) pour la languette (9) présentant le tronçon de retenu (3c) est prévu à l'extrémité intérieur de la face étroite (1a) guidant l'élément auxiliaire (3) en forme d'étrier, de manière à ce que la partie terminale (3, 3c) de l'étrier présentant les deux languettes (9, 10) est forcée légèrement vers l'intérieur lorsque l'étrier est dans sa position rentrée, permettant ainsi au nez de verrouillage (3d) de venir en position de verrouillage sans cependant empêcher un déverrouillage.

8. Dispositif selon l'une des revendications 1-7, caractérisé en ce que la fente de verrouillage (3e) se trouve sur la face étroite (1c) de la boîte en face de l'ouverture d'introduction (1b) dans la zone du coin entre deux faces étroites (1a, 1c) se buttant à angle droit.
